# FASCICULE DE BREVET EUROPEEN

(11) **EP 3 392 117 B1**
(45) Date de publication et mention de la délivrance du brevet: **17.06.2020**
(21) Numéro de dépôt: 18168262.6
(22) Date de dépôt: 19.04.2018
(51) Int. Cl.: B61D 27/00, B61D 29/00

(54) **VOITURE FERROVIAIRE**
EISENBAHNWAGGON
RAILWAY CAR

(30) Priorité: 19.04.2017 FR 1753394
(43) Date de publication de la demande: 24.10.2018
(73) Titulaire: ALSTOM Transport Technologies, 93400 Saint-Ouen (FR)
(72) Inventeur: TERRIER, Jean-Luc, 59300 VALENCIENNES (FR)
(74) Mandataire: Lavoix

(56) Documents cités:
- CN-U- 201 619 575
- FR-A1- 2 730 038
- JP-A- 2015 033 894
- KR-A- 20100 099 003
- KR-B1- 101 656 698

## Description

La présente invention concerne une voiture ferroviaire de transport de voyageurs.

Les voitures ferroviaires de transport de voyageurs sont équipées de systèmes de chauffage permettant de contrôler la température du compartiment voyageur et en particulier de maintenir cette température à un niveau acceptable en hiver. Ces systèmes de chauffage prennent fréquemment la forme d'une climatisation réversible propre à injecter dans le compartiment voyageur un air chauffé par une source de chaleur.

La source de chaleur est en général un système électrique, comprenant par exemple une résistance chauffante. Cela est en particulier le cas pour les voitures ferroviaires tractées par une locomotive électrique alimentée par des caténaires. Lorsque la locomotive est une locomotive à moteur thermique, l'électricité est fournie par un générateur électrique embarqué dans la locomotive.

Les systèmes de chauffage précités transmettent donc leur chaleur aux voyageurs principalement par conduction ou convection thermique. Ainsi, afin d'augmenter la température ressentie par les voyageurs, il est nécessaire de chauffer l'intégralité du compartiment voyageur. L'inertie thermique du compartiment voyageur empêche alors d'ajuster rapidement la température ressentie par les voyageurs. En outre, les voitures ferroviaires étant en général mises à l'arrêt pendant la nuit, celles-ci se refroidissent, et il est nécessaire de les chauffer à nouveau le matin, ce qui entraîne une consommation énergétique importante du fait de leur importante inertie thermique.

Le document JP 2015 033894 A décrit une voiture ferroviaire de transport de voyageurs, comprenant au moins un compartiment voyageur et un système de chauffage du compartiment voyageur comportant une source de rayonnement infrarouge.

L'invention a pour but de proposer une voiture ferroviaire de transport de voyageurs qui soit plus économe en énergie.

A cet effet, l'invention a pour objet une voiture ferroviaire de transport de voyageurs, comprenant au moins un compartiment voyageur et un système de chauffage du compartiment voyageur, le système de chauffage comportant une source de rayonnement infrarouge, au moins un guide d'ondes configuré pour guider le rayonnement infra-rouge généré par la source et un diffuseur configuré pour illuminer au moins une portion du compartiment voyageur avec le rayonnement infra-rouge, la source comportant un barreau propre à émettre le rayonnement infrarouge et un concentrateur propre à concentrer le rayonnement infrarouge et à l'injecter dans le guide d'ondes.

Selon des modes de réalisation particuliers de l'invention, la voiture ferroviaire comprend une ou plusieurs des caractéristiques suivantes, prises isolément ou selon toutes les combinaisons techniquement possibles :
- le barreau comporte un tube et une résistance accueillie dans le tube et propre à chauffer le tube pour provoquer l'émission du rayonnement infrarouge ;
- le tube est réalisé en quartz ;
- le concentrateur comporte un ensemble de lentilles ;
- les lentilles sont réalisées en verre à base silice à faible teneur en groupes hydroxyles ;
- les lentilles sont réalisées en verre fluoré ;
- la voiture ferroviaire comprend, en outre, un compartiment technique séparé du compartiment voyageur, la source étant accueillie dans le compartiment technique.

L'invention sera mieux comprise à la lecture de la description qui va suivre, donnée uniquement à titre d'exemple non limitatif et faite en référence aux dessins annexés, sur lesquels :
- la figure 1 est une vue schématique de côté d'une voiture de véhicule ferroviaire comportant un système de chauffage, et
- la figure 2 est une représentation schématique d'un autre exemple de système de chauffage.

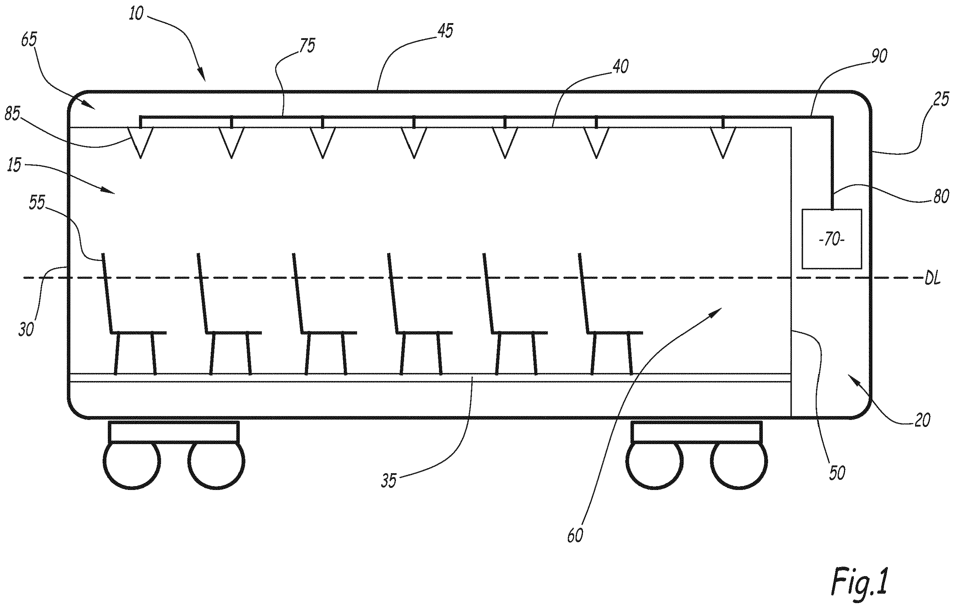

Une voiture ferroviaire 10 est représentée sur la figure 1. La voiture ferroviaire 10 est une voiture de transport de voyageurs. La voiture 10 est configurée pour être intégrée dans un véhicule ferroviaire tel qu'une rame ou un train. Le véhicule comporte alors au moins une voiture 10, par exemple plusieurs voitures 10.

Une direction longitudinale DL est définie pour la voiture ferroviaire 10. La direction longitudinale DL est la direction selon laquelle la voiture ferroviaire 10 est configurée pour se déplacer.

La voiture ferroviaire 10 comporte un compartiment voyageur 15, un compartiment technique 20, un système de chauffage, une première paroi extrême 25, une deuxième paroi extrême 30, un plancher 35, un plafond 40, un toit 45 et une cloison intérieure 50.

La voiture ferroviaire 10 est délimitée, selon la direction longitudinale DL, par la première paroi extrême 25 et la deuxième paroi extrême 30.

Le compartiment voyageur 15 est configuré pour accueillir un ensemble de passagers.

Le compartiment voyageur 15 est délimité selon la direction longitudinale DL, par la deuxième paroi extrême 30 et par la cloison intérieure 50. Le compartiment voyageur 15 est délimité, selon une direction verticale, par le plancher 35 et le plafond 40.

Le compartiment voyageur 15 présente une longueur, mesurée selon la direction longitudinale DL, comprise entre 10 mètres (m) et 30 m. Le compartiment voyageur 15 présente une largeur, mesurée selon une direction horizontale perpendiculaire à la direction longitudinale DL, comprise entre 2 m et 3 m.

Le compartiment voyageur 15 comporte un ensemble de places de passagers. Il est entendu par « place de passager » un volume du compartiment voyageur 15 destiné à accueillir un voyageur.

Par exemple, le compartiment voyageur 15 comprend un ensemble de sièges 55 et un espace de circulation 60.

Chaque siège 55 est propre à accueillir un passager assis.

Selon l'exemple de la figure 1, chaque siège 55 est configuré pour permettre au passager de s'assoir dans le sens de la marche. Il est à noter que d'autres dispositions des sièges 55 sont susceptibles d'être utilisées pour le compartiment voyageur 15.

Un espace configuré pour permettre un passager de se tenir debout est un autre exemple de place de passager. Par exemple, l'espace de circulation 60 est un volume dépourvu de siège 55 et permettant à un ou plusieurs passagers de se déplacer ou de se tenir debout. Par exemple, l'espace de circulation 60 est équipé de poignées permettant à des passagers de se retenir en cas de freinage de la voiture ferroviaire 10.

Le plafond 40 et le toit 45 délimitent un volume de service 65 situé au-dessus du compartiment voyageur 15.

Le compartiment technique 20 est configuré pour accueillir au moins partiellement le système de chauffage.

Le compartiment technique 20 est séparé du compartiment voyageur 15. Par exemple, le compartiment technique 20 est séparé du compartiment voyageur 15 par la cloison intérieure 50.

Selon l'exemple de la figure 1, le compartiment technique 20 est délimité selon la direction longitudinale DL par la première paroi extrême 25 et par la cloison intérieure 50.

Le compartiment technique 20 et le compartiment voyageur 15 sont décalés l'un par rapport à l'autre le long de la voiture ferroviaire 10. Par exemple, le compartiment technique 20 et le compartiment voyageur 15 sont alignés l'un avec l'autre selon la direction longitudinale DL.

En variante, le compartiment technique 20 est situé au-dessus du compartiment voyageur 15. Selon une autre variante, le compartiment technique 20 est situé au-dessous du compartiment voyageur 15.

Sur la figure 1, la voiture ferroviaire 10 est équipée d'un premier exemple de système de chauffage.

Le système de chauffage est configuré pour chauffer au moins une partie du compartiment voyageur 15. Le système de chauffage comporte une source infrarouge 70 et au moins un conducteur optique 75.

La source infrarouge 70 est configurée pour émettre un rayonnement infrarouge R. Les rayonnements infrarouges sont constitués d'ondes électromagnétiques présentant une longueur d'onde comprise entre 500 nanomètres et 2,5 millimètres.

Les rayonnements infrarouges R présentent, par exemple, une longueur d'onde infrarouge proche. Les longueurs d'onde infrarouge proche sont les longueurs d'onde infrarouge inférieures à 3,5 micromètres.

Selon un mode de réalisation, la source infrarouge 70 est configurée pour générer un rayonnement infrarouge R présentant une puissance comprise entre 1 kilowatts (kW) et 10 kW. Par exemple, le rayonnement infrarouge R est égal à 3 kW.

La source infrarouge 70 comprend, par exemple, un émetteur infrarouge propre à émettre le rayonnement infrarouge R lorsque l'émetteur infrarouge est chauffé à haute température. Il est entendu par « haute température » une température supérieure ou égale à 300°C, par exemple supérieure ou égale à 500°C, par exemple supérieure ou égale à 1000°C.

Des émetteurs chauffés sont fréquemment utilisés dans des systèmes de chauffage par rayonnement, par exemple pour les terrasses des cafés. La longueur d'onde et la puissance du rayonnement R dépendent alors de la température de l'émetteur.

Il est à noter que d'autres types de sources sont susceptibles d'être utilisées. Par exemple, dans une variante, la source 70 est une source laser.

La source 70 est accueillie dans le compartiment technique 20.

Chaque conducteur optique 75 est configuré pour recevoir le rayonnement infrarouge R de la source 70 et pour illuminer au moins une portion du compartiment voyageur 15 avec le rayonnement infrarouge R.

Chaque conducteur optique 75 comporte une première extrémité 80, une deuxième extrémité 85 et un guide d'onde 90.

La première extrémité 80 est configurée pour recevoir le rayonnement infrarouge R de la source 70.

Chaque deuxième extrémité 85 est configurée pour illuminer au moins une portion du compartiment voyageur 15 avec le rayonnement infrarouge R. Par exemple, chaque deuxième extrémité 85 est configurée pour illuminer au moins une place de passager avec le rayonnement infrarouge R.

Au moins une deuxième extrémité 85 est configurée pour illuminer un passager assis sur un siège 55 avec le rayonnement R.

En variante, au moins une deuxième extrémité 85 est configurée pour illuminer un passager debout avec un rayonnement infrarouge R. Par exemple, au moins une deuxième extrémité 85 est configurée pour illuminer un passager debout dans l'espace de circulation 60 avec un rayonnement infrarouge R.

Sur l'exemple de la figure 1, le compartiment voyageur 15 comprend six deuxièmes extrémités 85 configurées chacune pour illuminer un passager assis sur un siège 55 avec le rayonnement infrarouge R, et une deuxième extrémité 85 configurée pour illuminer au moins une portion de l'espace de circulation 60.

Il est à noter que le nombre et la disposition des deuxièmes extrémités 85 est susceptible d'être adapté en fonction de la configuration du compartiment voyageur 15.

Selon un mode de réalisation, au moins une deuxième extrémité 85 configurée pour illuminer un passager assis sur un siège 55 est fixée au-dessus du siège 55 correspondant.

Au moins une deuxième extrémité 85 est fixée au plafond 40. Par exemple, la deuxième extrémité 85 est fixée au plafond 40 au-dessus d'un siège 55 ou de l'espace de circulation 60. Selon une variante, au moins une deuxième extrémité 85 est fixée à un porte-bagage situé au-dessus d'un siège 55.

Selon un mode de réalisation, au moins une deuxième extrémité 85 est fixée sous un siège 55. Dans ce cas, la deuxième extrémité 85 est configurée pour illuminer la partie inférieure du corps d'un passager debout dans l'espace de circulation 60.

Chaque guide d'onde 90 est configuré pour guider le rayonnement infrarouge R entre la première extrémité 80 et la deuxième extrémité 85. Selon l'exemple de la figure 1, le guide d'onde 90 est accueilli dans le volume de service 65.

Le guide d'onde 90 est, par exemple, un guide d'onde métallique. Un guide d'onde métallique comprend une ou plusieurs parois métalliques propres chacune à refléter le rayonnement infrarouge R.

Le guide d'onde 90 est, par exemple, réalisé en aluminium. Selon une variante, le guide d'onde 90 est réalisé en un autre matériau métallique.

Selon un mode de réalisation, le guide d'onde 90 est réalisé en un matériau plastique recouvert d'une couche de métal.

Selon une variante, le guide d'onde 90 est une fibre optique, de préférence une fibre optique acceptant sans pertes des longueurs d'onde comprises entre 0,5 micromètres et 2,5 millimètres.

Il est à noter qu'un même guide d'onde 90 est susceptible de connecter une même première extrémité 80 à une ou plusieurs deuxièmes extrémités 85. Selon l'exemple de la figure 1, un unique guide d'onde 90 guide le rayonnement infrarouge R entre la première extrémité 80 et chacune des sept deuxièmes extrémités 85 d'un même conducteur optique 75. Le conducteur optique 75 joue alors le rôle de diviseur de puissance, divisant le rayonnement infrarouge R reçu de la source 70 en une pluralité de rayonnements infrarouges R illuminant chacun une partie du compartiment voyageur 15.

Selon un mode de réalisation, le système de chauffage comporte une pluralité de conducteurs optiques 75, chaque conducteur optique 75 comprenant un unique guide d'onde 90 et une unique deuxième extrémité 85.

L'utilisation du rayonnement infra-rouge permet de modifier la température perçue par les passagers sans pour autant modifier la température de l'air dans la voiture ferroviaire 10.

Grâce à l'invention, le système de chauffage est propre à chauffer des passagers de la voiture ferroviaire 10 sans nécessairement chauffer le reste du compartiment voyageur 15, par exemple par conduction ou par convection. La température ressentie par les passagers de la voiture ferroviaire 10 est alors plus élevée. Le système de chauffage est donc plus efficace que les systèmes de chauffage de l'état de la technique. La voiture ferroviaire 10 est alors plus économe en énergie que les voitures ferroviaires de l'état de la technique.

En outre, de par l'utilisation des conducteurs optiques 75, la source infrarouge 70 est située dans le compartiment technique 20 et donc isolée des passagers. Cela est particulièrement important lorsque la source infrarouge 70 comporte un émetteur chauffé à haute température. Le système de chauffage est donc plus sécurisé.

De plus, le compartiment technique 20 est susceptible d'être aéré indépendamment du compartiment voyageur 15, dont il est séparé. Cela permet alors d'assurer un contrôle de l'atmosphère du compartiment technique 20 sans affecter la température du compartiment voyageur 15.

L'utilisation d'un guide d'onde 90 métallique permet la transmission d'une large gamme de longueurs d'onde. Le système de chauffage est donc, là encore, plus efficace.

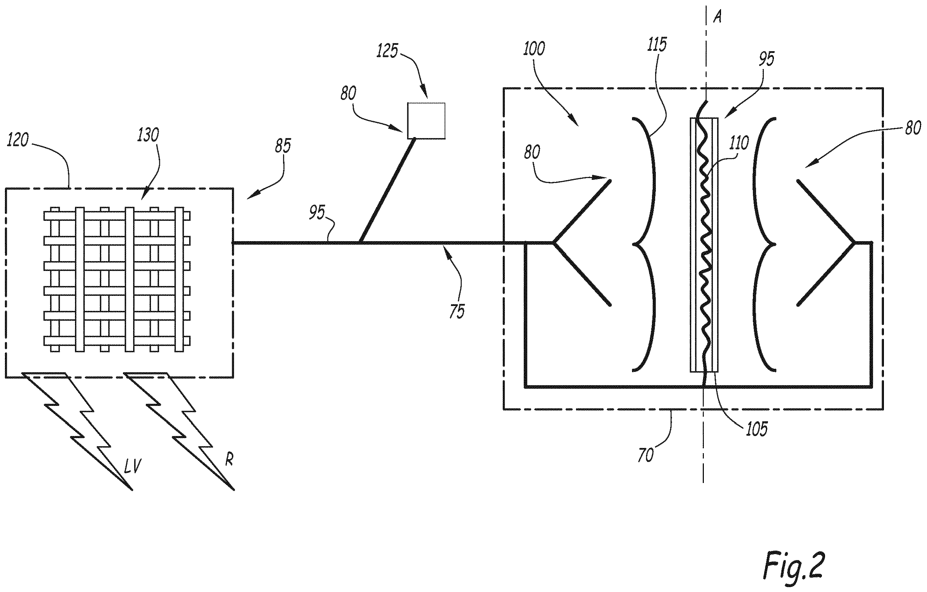

Un deuxième exemple de système de chauffage va maintenant être décrit en référence à la figure 2. Les éléments identiques au premier exemple de système de chauffage de la figure 1 ne sont pas décrits à nouveau. Seules les différences sont mises en évidence.

La source de rayonnement infrarouge 70 comporte un barreau 95, une source électrique et un concentrateur 100.

Le barreau 95 est propre à émettre le rayonnement infrarouge R.

Le barreau 95 comporte un tube 105 et une résistance 110 électrique.

Le tube 105 est configuré pour émettre le rayonnement infrarouge R lorsque le tube 105 est chauffé à haute température.

Le tube 105 est, par exemple, réalisé en quartz.

Le tube 105 est, par exemple, cylindrique à base circulaire et présente un axe A. Le tube 105 présente une longueur L, un diamètre extérieur D et un diamètre intérieur d.

La résistance 110 chauffe lorsqu'elle est traversée par un courant électrique.

La résistance 110 est connectée à la source électrique pour le passage d'un courant électrique dans la résistance 110.

La résistance 110 est disposée pour chauffer le tube 105, de préférence à haute température, lorsque la résistance 110 est traversée par le courant électrique.

La résistance 110 est ici accueillie dans le tube 105.

Le concentrateur 100 est configuré pour recevoir du barreau 95 le rayonnement infrarouge R, pour concentrer le rayonnement infrarouge R et pour injecter le rayonnement infrarouge R dans la première extrémité 80 du conducteur optique 75.

Selon un mode de réalisation, le concentrateur 100 entoure le tube 105 dans un plan perpendiculaire à l'axe A du tube 105.

Le concentrateur 100 comporte un ensemble de lentilles 115.

Chaque lentille 115 est une lentille convergente. Par exemple, chaque lentille est une lentille de Fresnel.

Il est à noter que d'autres types de lentilles 115 convergentes sont susceptibles d'être utilisés.

Chaque lentille 115 est réalisée en verre à base silice à faible teneur en groupes hydroxyles.

Selon l'exemple de la figure 2, chaque lentille 115 est associée à une première extrémité 80 correspondante dans laquelle la lentille 115 est propre à concentrer et à injecter une partie du rayonnement infrarouge R.

Le guide d'ondes 90 est une fibre optique. Par exemple, le guide d'ondes 90 est une fibre optique en verre à base silice. Le verre à base silice, également appelé « verre de quartz » est une forme amorphe de silice, fréquemment obtenue par fusion de quartz.

Selon un mode de réalisation, la fibre optique est en verre à base silice à faible teneur en groupes hydroxyles. Par exemple, la fibre optique est en verre à base silice avec une teneur en groupes hydroxyles inférieure ou égale à 10 par million.

Les verres à base silice à faible teneur en groupes hydroxyles présentent en général des taux de transmission très élevés dans la gamme infrarouge.

Selon une variante, la fibre optique est réalisée en verre fluoré. Les verres fluorés sont des verres comprenant des molécules à base de fluor telles que ZrF4 ou InF3.

Selon un mode de réalisation, les lentilles 115 sont réalisées en verre fluoré.

Selon l'exemple de la figure 2, le conducteur optique 75 comporte une unique fibre optique 90 présentant une pluralité de premières extrémités 80. Selon une variante, le conducteur optique 75 comporte un faisceau de fibres optiques 90, chaque fibre optique 90 présentant une unique première extrémité correspondant à une unique lentille 115.

Chaque troisième extrémité 85 comporte un diffuseur optique 120.

La voiture ferroviaire 10 comporte, en outre, une lampe 125. La lampe 125 est configurée pour émettre une lumière visible LV. La lampe 125 comporte, par exemple, une diode électroluminescente.

La lampe 125 est configurée pour injecter la lumière visible LV dans une première extrémité 80 du conducteur optique 75.

Chaque diffuseur optique 120 est configuré pour recevoir le rayonnement infrarouge R du guide d'ondes 90 et pour illuminer au moins une portion du compartiment voyageur 15 avec le rayonnement infrarouge.

Chaque diffuseur optique 120 est, en outre, configuré pour recevoir la lumière visible LV du guide d'ondes 90 et pour illuminer au moins une portion du compartiment voyageur 15 avec la lumière visible LV.

Chaque diffuseur optique 120 est configuré pour répartir le rayonnement infrarouge R et/ou la lumière visible LV reçue sur une surface supérieure à la surface de section du guide d'ondes 90. Par exemple, chaque diffuseur optique 120 est configuré pour répartir le rayonnement infrarouge R et/ou la lumière visible LV reçue sur une surface supérieure ou égale à 50 centimètres carrés.

Chaque diffuseur optique 120 présente un arrangement 130 de fibres.

L'arrangement 130 est configuré pour recevoir le rayonnement infrarouge R et pour illuminer au moins une portion du compartiment voyageur 15 avec le rayonnement infrarouge.

L'arrangement 130 est, par exemple, un tissu. Un tissu est un arrangement obtenu par l'assemblage régulier de fibres croisées, par exemple à angle droit.

Selon une variante, l'arrangement 130 est un arrangement non-tissé.

Chaque arrangement 130 recouvre au moins partiellement une face d'une cloison du compartiment voyageurs 15 ou d'un objet situé dans le compartiment voyageur 15.

Selon un mode de réalisation, l'arrangement 130 comporte, en outre, sur sa face en regard de la face du compartiment voyageurs 15 que l'arrangement 130 recouvre, une couche propre à réfléchir vers l'intérieur du compartiment voyageurs 15 le rayonnement infrarouge R et/ou la lumière visible LV.,

L'arrangement 130 comporte, par exemple, des fibres d'un premier type et des fibres d'un deuxième type.

Chaque fibre du premier type est une fibre conductrice du rayonnement infrarouge R. Par exemple, chaque fibre du premier type est réalisée en un verre à base silice.

Chaque fibre du deuxième type est conductrice de la lumière visible LV. En particulier, chaque fibre du deuxième type est réalisée en verre transparent à la lumière visible.

Chaque fibre du premier ou du deuxième type est propre à recevoir à une extrémité le rayonnement infrarouge R ou la lumière visible LV et à illuminer au moins une partie du compartiment voyageur 15 avec le rayonnement infrarouge R ou la lumière visible LV reçu. Par exemple, chaque fibre présente une surface latérale rugueuse propre à diffuser au moins partiellement le rayonnement infrarouge R ou la lumière visible LV hors de la fibre.

Chaque fibre du premier ou du deuxième type est propre à recevoir à une extrémité le rayonnement infrarouge R ou la lumière visible LV et à transmettre le rayonnement infrarouge R ou la lumière visible LV aux fibres du même type avec lesquelles la fibre considérée est en contact.

Selon un mode de réalisation, les fibres du premier type sont distinctes des fibres du deuxième type. Par exemple, le conducteur optique 75 comporte un premier guide d'ondes 95 configuré pour recevoir le rayonnement infrarouge R de la source 70 et pour transmettre le rayonnement infrarouge R aux fibres du premier type, et un deuxième guide d'ondes 95 configuré pour recevoir la lumière visible LV de la lampe 125 et pour transmettre la lumière visible LV aux fibres du deuxième type.

Selon une variante, l'arrangement 130 comporte des fibres propres à conduire à la fois le rayonnement infrarouge R et la lumière visible LV. Dans ce cas, le conducteur optique 75 comporte, par exemple, un unique guide d'ondes 95 configuré pour recevoir, à une ou plusieurs de ses premières extrémités 80, le rayonnement infrarouge R émis par la source 70 et la lumière visible LV émise par la lampe 125. Le guide d'onde 95 transmet alors simultanément le rayonnement infrarouge R et la lumière visible LV à l'arrangement 130.

Selon un mode de réalisation, les fibres du premier type ou du deuxième type sont intégrées dans une matrice de fibres d'un troisième type. Les fibres du troisième type sont des fibres tissées les unes avec les autres. Par exemple, les fibres du premier et du deuxième type sont sensiblement parallèles les unes aux autres et sont maintenues en position par la matrice tissée.

L'arrangement 130 définit une surface d'illumination. La surface d'illumination présente une aire supérieure ou égale à 100 centimètres carrés.

Grâce à l'utilisation d'un arrangement 130 de fibres, le rayonnement infrarouge R est émis dans le compartiment voyageur 15 par une surface d'illumination de grande dimension. Les risques de dommages oculaires à des passagers qui regarderaient directement la surface d'illumination sont donc réduits.

En outre, l'utilisation des arrangements 130 pour émettre la lumière visible LV dans le compartiment voyageur permet également de simplifier la fabrication de la voiture ferroviaire et de diminuer son coût, puisqu'il n'est alors plus nécessaire de prévoir des appliques réparties dans le compartiment voyageur 15.

Le barreau 95 est une source de rayonnement infrarouge R efficace à une longueur d'onde d'environ 1 micromètre. Cette longueur d'onde est particulièrement adaptée à être transportée par une fibre optique 90, et en particulier une fibre optique en verre à base silice. En outre, le barreau 95 est peu onéreux par rapport à d'autres types de sources de rayonnement infrarouge.

Le concentrateur 100 permet une collecte efficace du rayonnement infrarouge R.

Les différents exemples et modes de réalisation décrits ci-dessus sont susceptibles d'être combinés entre eux pour générer de nouveaux modes de réalisation.

## Revendications

1. Voiture ferroviaire (10) de transport de voyageurs, comprenant au moins un compartiment voyageur (15) et un système de chauffage du compartiment voyageur (15), le système de chauffage comportant une source (70) de rayonnement infrarouge, au moins un guide d'ondes (90) configuré pour guider le rayonnement infra-rouge généré par la source (70) et un diffuseur (120) configuré pour illuminer au moins une portion du compartiment voyageur (15) avec le rayonnement infra-rouge,
**caractérisée en ce que** la source (70) comporte un barreau (95) propre à émettre le rayonnement infrarouge, et un concentrateur propre à concentrer le rayonnement infrarouge et à l'injecter dans le guide d'ondes (90).

2. Voiture ferroviaire de transport de voyageurs selon la revendication 1, dans laquelle le barreau (95) comporte un tube (105) et une résistance (110) accueillie dans le tube (105) et propre à chauffer le tube (105) pour provoquer l'émission du rayonnement infrarouge.

3. Voiture ferroviaire de transport de voyageurs selon la revendication 2, dans laquelle le tube (105) est réalisé en quartz.

4. Voiture ferroviaire de transport de voyageurs selon l'une quelconque des revendications 1 à 3, dans laquelle le concentrateur (100) comporte un ensemble de lentilles (115).

5. Voiture ferroviaire de transport de voyageurs selon la revendication 4, dans laquelle les lentilles (115) sont réalisées en verre à base silice à faible teneur en groupes hydroxyles.

6. Voiture ferroviaire de transport de voyageurs selon la revendication 4, dans laquelle les lentilles (115) sont réalisées en verre fluoré.

7. Voiture ferroviaire (10) de transport de voyageurs selon l'une quelconque des revendications 1 à 6, comprenant, en outre, un compartiment technique (20) séparé du compartiment voyageur (15), la source (70) étant accueillie dans le compartiment technique (20).

## Patentansprüche

1. Eisenbahnwagen (10) zum Transport von Reisenden, mindestens ein Fahrgastabteil (15) und ein Heizsystem des Fahrgastabteils (15) umfassend, wobei das Heizsystem eine Infrarotstrahlungsquelle (70) aufweist und mindestens ein Wellenleiter (90) ausgebildet ist, die von der Quelle (70) erzeugte Infrarotstrahlung zu führen, und ein Diffusor ausgebildet ist, mindestens einen Bereich des Fahrgastabteil (15) mit der Infrarotstrahlung zu bestrahlen,
**dadurch gekennzeichnet, dass** die Quelle (70) eine Stange (95), die geeignet ist, die Infrarotstrahlung auszusenden, und einen Konzentrator aufweist, der geeignet ist, die Infrarotstrahlung zu konzentrieren und sie in den Wellenleiter (90) einzugeben.

2. Eisenbahnwagen zum Transport von Reisenden nach Anspruch 1, bei dem die Stange (95) ein Rohr (105) und einen in dem Rohr (105) aufgenommenen Widerstand (110) aufweist, der geeignet ist, das Rohr (105) aufzuheizen, um die Emission der Infrarotstrahlung hervorzurufen.

3. Eisenbahnwagen zum Transport von Reisenden nach Anspruch 2, bei dem das Rohr (105) aus Quarz hergestellt ist.

4. Eisenbahnwagen zum Transport von Reisenden nach einem beliebigen der Ansprüche 1 bis 3, bei dem der Konzentrator (100) eine Linsenanordnung (115) aufweist.

5. Eisenbahnwagen zum Transport von Reisenden nach Anspruch 4, bei dem die Linsen (115) aus einem Glas auf Basis von Silizium mit geringem Gehalt an Hydroxylgruppen hergestellt sind.

6. Eisenbahnwagen zum Transport von Reisenden nach Anspruch 4, bei dem die Linsen (115) aus einem Fluoridglas hergestellt sind.

7. Eisenbahnwagen (10) zum Transport von Reisenden nach einem beliebigen der Ansprüche 1 bis 6, außerdem ein Technikabteil (20) umfassend, das von dem Fahrgastabteil (15) getrennt ist, wobei die Quelle (70) in dem Technikabteil (20) aufgenommen ist.

## Claims

1. Railway carriage (10) for transporting passengers, comprising at least one passenger compartment (15) and a heating system for the passenger compartment (15), the heating system comprising a source (70) of infra-red radiation, at least one waveguide (90) configured to guide the infra-red radiation generated by the source (70), and a diffuser (120) configured to illuminate at least a portion of the passenger compartment (15) with the infra-red radiation,
**characterised in that** the source (70) comprises a bar (95) capable of emitting the infra-red radiation and a concentrator capable of concentrating the infra-red radiation and of injecting it into the waveguide (90).

2. Railway carriage for transporting passengers according to claim 1, wherein the bar (95) comprises a tube (105) and a resistor (110) which is accommodated in the tube (105) and capable of heating the tube (105) in order to cause the emission of the infra-red radiation.

3. Railway carriage for transporting passengers according to claim 2, wherein the tube (105) is made of quartz.

4. Railway carriage for transporting passengers according to any one of claims 1 to 3, wherein the concentrator (100) comprises a set of lenses (115).

5. Railway carriage for transporting passengers according to claim 4, wherein the lenses (115) are made of silica-based glass with a low hydroxyl group content.

6. Railway carriage for transporting passengers according to claim 4, wherein the lenses (115) are made of fluoride glass.

7. Railway carriage (10) for transporting passengers according to any one of claims 1 to 6, further comprising a technical compartment (20) separate from the passenger compartment (15), the source (70) being accommodated in the technical compartment (20).
